# EUROPÄISCHE PATENTSCHRIFT

(11) **EP 2 952 091 B1**
(45) Veröffentlichungstag und Bekanntmachung des Hinweises auf die Patenterteilung: **05.02.2020**
(21) Anmeldenummer: 14171418.8
(22) Anmeldetag: 05.06.2014
(51) Int. Cl.: A01G 25/02

(54) **Tropfbewässerungsrohr mit darin eingesetzten Dosierelementen**
Drip irrigation pipe with dosing elements inserted therein
Tuyau d'irrigation goutte à goutte doté d'éléments de dosage intégrés

(43) Veröffentlichungstag der Anmeldung: 09.12.2015
(73) Patentinhaber: THE Machines Yvonand SA, 1462 Yvonand (CH)
(72) Erfinder: Loebinger, Ahai, 1462 Yvonand (CH); Kertscher, Eberhard, 1462 Yvonand (CH)
(74) Vertreter: BOVARD AG

(56) Entgegenhaltungen:
- WO-A1-02/04130
- WO-A1-2012/137200
- WO-A1-2012/158462
- WO-A1-2014/016832
- US-A1- 2003 150 940

## Beschreibung

Die vorliegende Erfindung bezieht sich auf ein Tropfbewässerungsrohr mit darin eingesetzten Dosierelementen, die mit der Wandung des Tropfbewässerungsrohres verbunden sind, welche Dosierelemente jeweils Eintrittsbereiche, durch welche das Wasser vom Rohr in die Dosierelemente gelangt, Dosierbereiche, in welchen eine Druckreduzierung des durchfliessenden Wassers erfolgt, und Austrittbereiche, durch welche das Wasser über in der Rohrwandung angebrachte Austrittöffnungen aus den Tropfbewässerungsrohr austritt, umfassen.

Derartige Tropfbewässerungsrohre sind in vielfältiger Weise bekannt, wie in US2003/150940. Diese werden insbesondere zur direkten Bewässerung von Pflanzen verwendet. Im Bereich jeder Pflanze kann hierzu im Rohr mindestens ein Dosierelement angebracht sein, durch welches das Wasser über eine Austrittöffnung tropfweise ausgelassen wird und eine Bewässerung der jeweiligen Pflanze erfolgt. Mit derartigen Tropfbewässerungsrohren kann das Wasser sehr sparsam und effizient eingesetzt werden. Ein weiteres Tropfbewässerungsrohr ist aus WO 2014/016832 A1 bekannt.

Während des Bewässerungsvorgangs steht das Wasser in den Tropfbewässerungsrohren unter einem bestimmten Druck. Über die Druckreduzierung in den Dosierbereichen der Dosierelemente tritt das Wasser tropfweise durch die Austrittöffnungen aus dem Tropfbewässerungsrohren aus. Wenn die Bewässerung über die Tropfbewässerungsrohre unterbrochen oder abgestellt wird, baut sich der Druck des Wassers in den Tropfbewässerungsrohren ab. Da die Tropfbewässerungsrohre über deren Längen in den zubewässenden Kulturen den Unhebenheiten oder Neigungen des Bodens folgen, wird das in den Tropfbewässerungsrohren sich befindende Wasser an die tiefste Stelle des Tropfbewässerungsrohres zurück laufen. Dadurch entsteht in gewissen Bereichen der Tropfbewässerungsrohre ein Unterdruck, an den Austrittöffnungen der Tropfbewässerungsrohre entsteht dadurch eine Ansaugwirkung, diese Ansaugwirkung kann zur Folge haben, dass Verschmutzungsteilchen aus dem umliegenden Erdreich angesaugt und in den Dosierbereich der Dosierelemente gelangen kann. Dies kann zu einer Verstopfung des Dosierelementes führen, die erwünschte Bewässerung der im Bereich dieser Austrittöffnungen sich befindenden Pflanzen wird gestört, was zu einem Verkümmern dieser Pflanze oder sogar zum Absterben führen kann.

Es sind verschiedene Arten von Tropfbewässerungsrohren bekannt. Insbesondere bei dünnwandigen Rohren werden Dosierelemente eingesetzt, welche die Form eines Plättchens oder fortlaufenden Bandes aufweisen, in welche die Strukturen des Dosierelementes eingeprägt sind. Diese Tropfbewässerungsrohre sind im "Ruhezustand" flach gedrückt. Bei dickwandigeren Tropfbewässerungsrohren, die beispielsweise ins Erdreich hinein verlegt werden, werden üblicherweise Dosierelemente eingesetzt, die eine hohlzylindrische Form aufweisen. In diese hohlzylindrischen Dosierelemente sind die Dosierstrukturen eingeformt.

Bei all diesen Tropfbewässerungsrohren kann im Bereich der Austrittöffnungen aus den oben aufgeführten Gründen die beschriebene Saugwirkung auftreten.

Die Aufgabe der vorliegenden Erfindung besteht darin, die Tropfbewässerungsrohre derart auszugestalten, dass möglichst vermieden wird, dass in die Dosierbereiche der Dosierelemente durch die Austrittöffnungen Verschmutzungsteilchen eindringen und in die Dosierbereiche gelangen können, wodurch das entsprechende Dosierelement verstopft werden könnte.

Erfindungsgemäss erfolgt die Lösung dieser Aufgabe dadurch, dass die Austrittöffnungen die Form eines geschlossenen Schlitzes aufweisen, dessen Randbereiche beim Bewässerungsvorgang nach aussen angehoben sind und eine Öffnung bilden, und die beim Beendigen oder Unterbrechen des Bewässerungsvorgangs durch Abstützmittel derart abgestützt sind, dass ein Einbiegen der Randbereiche des Schlitzes gegen die Dosierelemente begrenzt ist und die schlitzförmigen Austrittsöffnungen verschlossen bleiben.

Die schlitzförmige Ausgestaltung der Austrittöffnungen ermöglicht, dass beim Bewässerungsvorgang die Randbereiche des Schlitzes nach aussen aufgebogen werden, sodass der Schlitz geöffnet wird und das Wasser austreten kann. Bei der vorgängig beschriebenen Saugwirkung, die im Bereich des Schlitzes beim Beendigen und Unterbrechen des Bewässerungsvorgangs durch den Druckabfall in Tropfbewässerungsrohr und den Rücklauf des Wassers auftreten kann, würden die Randbereiche des Schlitzes nach innen gegen das Dosierelement eingebogen und eine Öffnung bilden, durch die in diesen Randbereichen des Schlitzes angebrachten Abstützelemente wird ein derartiges Einbiegen dieser Randbereiche vermieden, die schlitzförmige Austrittöffnung bleibt somit verschlossen, das Eindringen von Verschmutzungsteilchen in das Dosierelement kann dadurch praktisch ausgeschlossen werden, die Funktion der einzelnen Dosierelemente in den Tropfbewässerungsrohren ist gewährleistet.

In vorteilhafter Weise sind die Abstützmittel an den Dosierelementen angeformt, was eine einfache Herstellung ermöglicht.

In vorteilhafter Weise sind die Abstützmittel aus Nocken gebildet, die entlang des Schlitzes an den Dosierelementen angeordnet sind. Über diese Nocken wird der jeweilige Randbereich des Schlitzes gegen das Einbiegen abgestützt, der Wasserdurchlauf ist optimal gewährleistet.

Die Abstützmittel können auch als Rippen ausgebildet sein, die längs zum jeweiligen Schlitz an den Dosierelementen angeordnet sind, wodurch eine optimale Abstützung der Randbereiche erreichbar ist.

Eine weitere vorteilhafte Ausgestaltung der Erfindung besteht darin, dass jedes Dosierelement mehrere Austrittbereiche umfassen kann. Dadurch kann über ein Dosierelement in einfacher Weise mehr Wasser ausgelassen werden.

Das Auslassen einer grösseren Menge von Wasser wird zusätzlich auch dadurch erreicht, dass für jeden Austrittbereich in der Rohrwandung mehr als eine Austrittöffnung in Form eines Schlitzes vorgesehen ist.

In vorteilhafter Weise weisen die Dosierelemente die Form eines Hohlzylinders auf, was insbesondere bei dickwandigeren Tropfbewässerungsrohren vorteilhaft ist.

Bei dünnwandigeren Tropfbewässerungsrohren können die Dosierelemente in vorteilhafter Weise die Form eines Plättchens oder Bandes aufweisen, wodurch die Tropfbewässerungsrohre bei Nichtgebrauch flach gedrückt sein können.

Je nach Ausgestaltung der Dosierelemente und wie die Austrittbereiche in diesen Dosierelementen angeordnet sein können, können die Schlitze parallel zur Längsachse des Tropfbewässerungsrohres oder quer zur Längsachse des Tropfbewässerungsrohres ausgerichtet sein.

Ausführungsformen der Erfindung werden nachfolgend an Hand der beiliegenden Zeichnung beispielhaft näher erläutert.

Es zeigt
Fig. 1 schematisch und in räumlicher Darstellung ein Dosierelement gemäss einer ersten Ausführungsform der Erfindung;
Fig. 2 in räumlicher Darstellung das Dosierelement gemäss Fig. 1 im in das Tropfbewässerungsrohr eingesetzten Zustand;
Fig. 3a und Fig. 3b die Darstellung der Austrittsöffnung in Form eines Schlitzes dieser ersten Ausführungsform, wenn der Druck innerhalb des Tropfbewässerungsrohres gleich 0 ist;
Fig. 4a und Fig. 4b die Darstellung der Austrittsöffnung in Form eines Schlitzes dieser ersten Ausführungsform, wenn der Druck innerhalb des Tropfbewässerungsrohres grösser als 0 ist;
Fig. 5a und Fig. 5b die Darstellung der Austrittsöffnung in Form eines Schlitzes dieser ersten Ausführungsform, wenn der Druck innerhalb des Tropfbewässerungsrohres kleiner als O ist;
Fig. 6 in schematischer Darstellung eine zweite Ausführungsform der Erfindung, bei welcher das Dosierelement als Plättchen ausgebildet ist und drei Austrittsöffnungen in Form eines Schlitzes aufweist;
Fig. 7a und Fig. 7b die Darstellung der Austrittsöffnungen in Form eines Schlitzes dieser zweiten Ausführungsform, wenn der Druck innerhalb des Tropfbewässerungsrohres gleich 0 ist;
Fig. 8a und Fig. 8b die Darstellung der Austrittsöffnungen in Form eines Schlitzes dieser zweiten Ausführungsform, wenn der Druck innerhalb des Tropfbewässerungsrohres grösser als 0 ist;

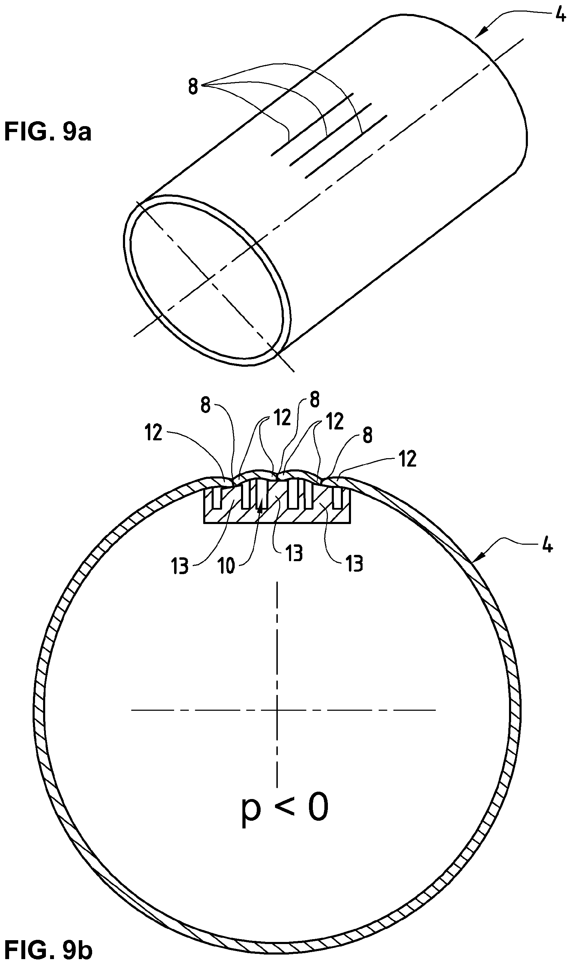

Fig. 9a und Fig. 9b die Darstellung der Austrittsöffnungen in Form eines Schlitzes dieser zweiten Ausführungsform, wenn der Druck innerhalb des Tropfbewässerungsrohres kleiner als 0 ist;
Fig. 10 schematisch und in räumlicher Darstellung ein Dosierelement gemäss einer dritten Ausführungsform der Erfindung;
Fig. 11 schematisch das Dosierelement gemäss Fig. 10 im in das Tropfbewässerungsrohr eingesetzten Zustand;
Fig. 12a und Fig. 12b die Darstellung der Austrittsöffnungen in Form eines Schlitzes dieser dritten Ausführungsform, wenn der Druck innerhalb des Tropfbewässerungsrohres gleich 0 ist;
Fig. 13a und Fig. 13b die Darstellung der Austrittsöffnungen in Form eines Schlitzes dieser dritten Ausführungsform, wenn der Druck innerhalb des Tropfbewässerungsrohres grösser als 0 ist;
Fig. 14a und Fig. 14b die Darstellung der Austrittsöffnungen in Form eines Schlitzes dieser dritten Ausführungsform, wenn der Druck innerhalb des Tropfbewässerungsrohres kleiner als 0 ist;
Fig. 15 bis Fig. 17 eine vierte Ausführungsform der Erfindung, bei welcher das Dosierelement die Form eines Plättchens aufweist und eine Austrittsöffnung in Form eines Schlitzes vorgesehen ist;
Fig. 18 und Fig. 19 eine fünfte Ausführungsform der Erfindung, bei welcher das Dosierelement als Plättchen ausgebildet ist und zwei Austrittsöffnungen in Form eines Schlitzes aufweist; und
Fig. 20 und Fig. 21 eine sechste Ausführungsform der Erfindung, bei welcher das Dosierelement als Plättchen ausgebildet ist mit vier Austrittsöffnungen in Form eines Schlitzes.

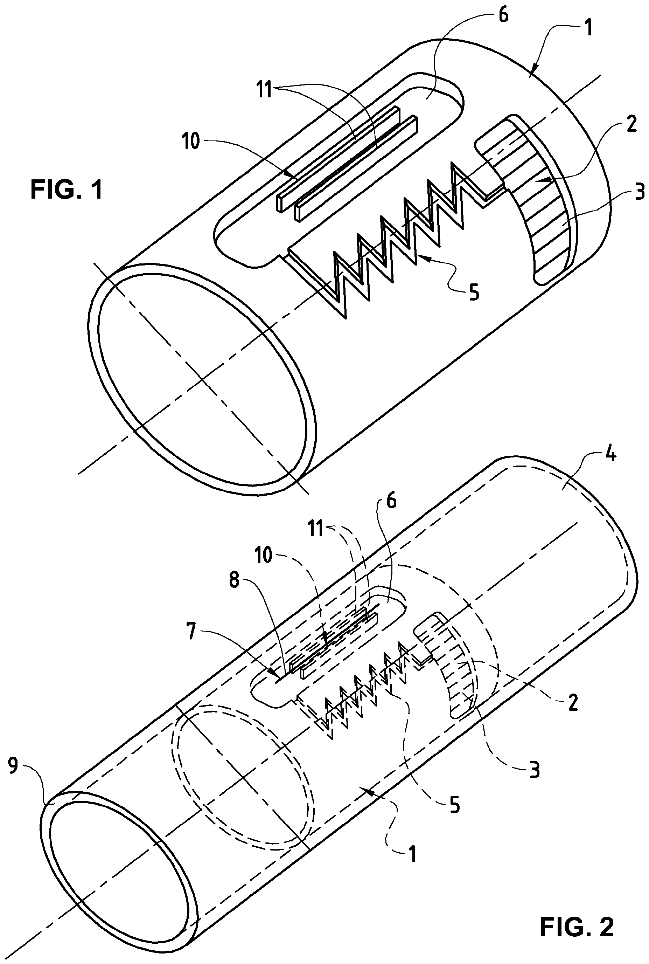

Fig. 1 und Fig. 2 zeigen ein Dosierelement 1, das die Form eines Hohlzylinders aufweist. In bekannter Weise umfasst dieses Dosierelement 1 einen Eintrittsbereich 2, der mit einem Filter 3 ausgestattet ist. Durch diesen Filter 3 gelangt das Wasser vom Tropfbewässerungsrohr 4 in den Eintrittsbereich 2. An diesen Eintrittsbereich 2 angeschlossen ist ein Dosierbereich 5, in welchem in bekannter Weise eine Druckreduzierung des durchfliessenden Wassers erfolgt. Aus diesem Dosierbereich 5 gelangt das Wasser in den Austrittsbereich 6, aus welchem das Wasser tropfweise in die Umgebung abgegeben werden kann.

Wie aus Fig. 2 ersichtlich ist, ist das Dosierelement 1 in bekannter Weise in das Tropfbewässerungsrohr 4 eingesetzt, in bekannter Weise sind die Oberflächen des Dosierelementes 1 mit der Wandung 9 des Tropfbewässerungsrohres 4 verbunden, insbesondere durch Verschweissen, was in bekannter Weise beim Herstellvorgang des Tropfbewässerungsrohres erfolgt, die Austrittöffnung weist die Form eines Schlitzes 8 auf, der sich mindestens über einen Teilbereich der Länge des Austrittbereiches 6 erstreckt.

Wie aus den Fig. 1 und 2 entnehmbar ist, sind im Austrittbereich 6 des Dosierelementes 1 Abstützmittel 10 angebracht, die in dieser ersten Ausführungsform als zwei Rippen 11 ausgebildet sind, die beidseits sich entlang des Schlitzes 8 erstrecken, und deren Funktion nachfolgend beschrieben wird.

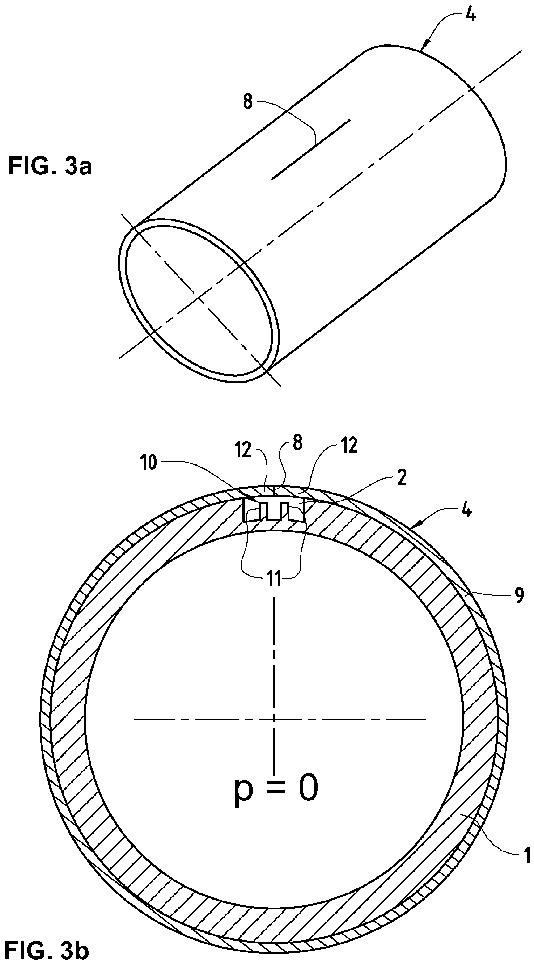

Aus der Fig. 3b ist das Dosierelement 1 ersichtlich, das die Form eines Hohlzylinders aufweist, welcher in das Tropfbewässerungsrohr 4 eingesetzt und mit diesem verbunden ist. Ebenfalls ersichtlich ist der Eintrittsbereich 2 des Dosierelementes 1, sowie der in der Wandung 9 angebrachte Schlitz 8. Die Abstützmittel sind durch die beiden Rippen 11 gebildet. Diese beiden Rippen 11 sind jeweils unterhalb eines Randbereichs 12 des Schlitzes 8 angeordnet. Der Druck innerhalb des Tropfbewässerungsrohres 4 ist hier gleich 0, aufgrund des elastischen Materials, aus welchem dieses Tropfbewässerungsrohr 4 gebildet ist, beispielsweise Polyethylen, liegen die Randbereiche 12, die den Schlitz 8 begrenzen, aufeinander, der Schlitz 8 ist geschlossen. Dies ist auch aus der Fig. 3a ersichtlich, welche das Tropfbewässerungsrohr 1 zeigt mit dem darin angebrachten Schlitz 8. Aus der Fig. 3b ist ersichtlich, dass die Rippen 11 gegenüber der umgebenden Oberfläche des Dosierelementes 1 leicht zurückversetzt sind, beim Verbinden des Dosierelementes 1 mit der Wandung 9 des Tropfbewässerungsrohres 4 bleibt somit zwischen den Rippen 11 und den Randbereichen 12 des Schlitzes 8 ein Zwischenraum bestehen.

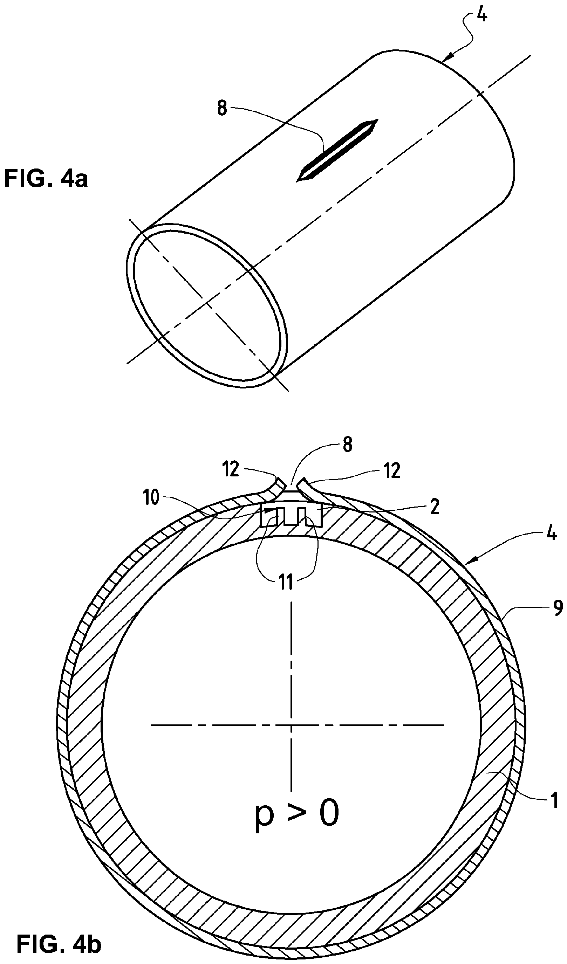

Fig. 4b zeigt das Tropfbewässerungsrohr 4 mit darin eingesetztem Dosierelement 1, wobei innerhalb des Tropfbewässerungsrohres 4 der Druck grösser ist als 0, welcher Zustand beim Bewässerungsvorgang erreicht wird. Im Eintrittsbereich 2 herrscht auch ein leicht höherer Druck, wodurch die beiden Randbereiche 12 des Schlitzes 8 nach aussen angehoben werden und eine Öffnung bilden, der Schlitz 8 lässt dadurch das Wasser aus dem Tropfbewässerungsrohr 4 austreten. Diese Situation ist auch in der Fig. 4a dargestellt, der im Tropfbewässerungsrohr 4 angebrachte Schlitz 8 ist geöffnet.

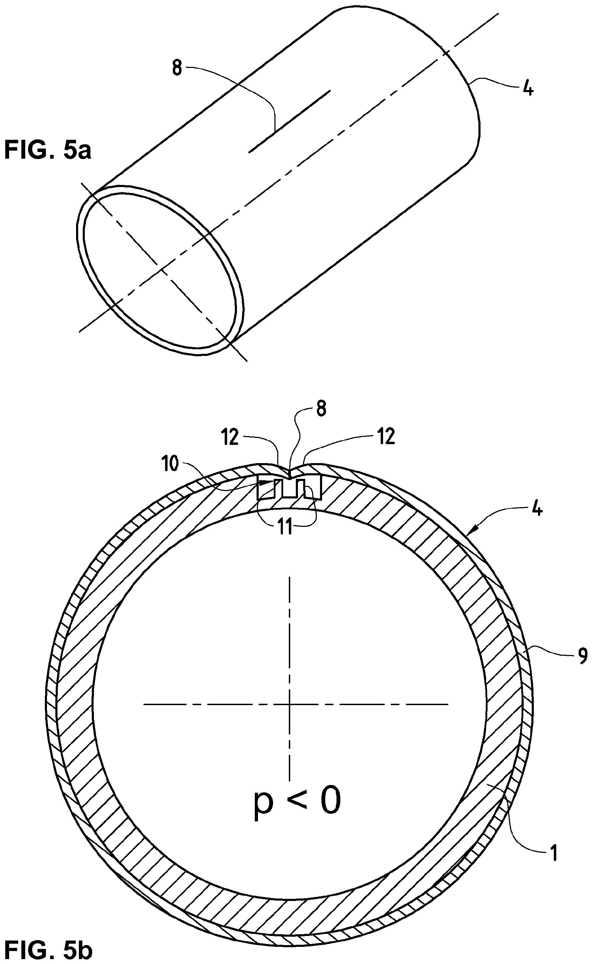

Wenn der Bewässerungsvorgang beendet ist, fällt der Druck innerhalb des Tropfbewässerungsrohres 4 zusammen und wird kleiner als 0, wie dies in Fig. 5b dargestellt ist. Insbesondere wenn die Tropfbewässerungsrohre 4 nicht absolut horizontal ausgerichtet sind, was üblicherweise der Fall ist, wird das im Tropfbewässerungsrohr 4 sich befindende Restwasser an dem tiefsten Punkt des Bewässerungssystems laufen, wodurch der Unterdruck innerhalb der Tropfbewässerungsrohre 4 zustande kommt. Dieser Unterdruck ist auch im Eintrittsbereich 2 festzustellen, auf den Schlitz 8 entsteht somit eine Saugwirkung, die Randbereiche 12 des Schlitzes 8 werden einwärts gebogen. Durch die Rippen 11, die die Abstützmittel 10 bilden, wird ein zu starkes Einbiegen vermieden, der Schlitz 8 bleibt somit auch in diesem Zustand verschlossen. Dadurch wird vermieden, dass durch den Schlitz 8 irgendwelche Verschmutzungsteilchen in den Eintrittsbereich 2 eindringen können, welche dann im Dosierbereich 5 (Fig. 1) landen würden und den Durchfluss des Wassers durch den Dosierbereich 5 verstopfen könnten.

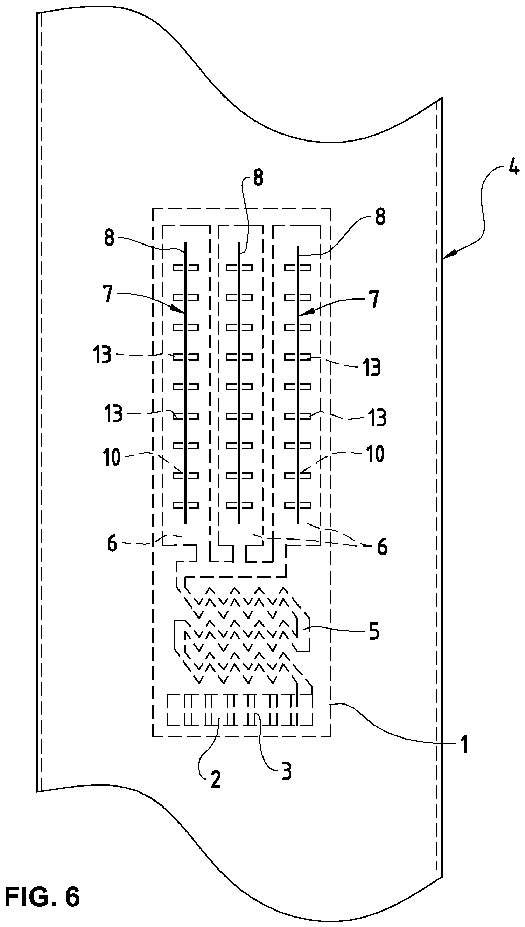

Fig. 6 zeigt eine Ausführungsform, bei welcher das in das Tropfbewässerungsrohr 4 eingesetzte Dosierelement 1 die Form eines Plättchens aufweist. Dieses Dosierelement umfasst wiederum einen Eintrittsbereich 2, einen Filter 3, einen Dosierbereich 5 und drei nebeneinander angeordnete Austrittbereiche 6. In Längsrichtung zu jedem Austrittbereich ist eine Austrittöffnung 7 in Form eines Schlitzes 8 in der Wandung 9 des Tropfbewässerungsrohres 4 angebracht. Im Bereich dieser Schlitze 8 sind wiederum Abstützmittel 10 angebracht, die hier als Nocken 13 ausgebildet sind, die sich jeweils quer über den Schlitz 8 erstrecken, und längs des Schlitzes 8 voneinander beabstandet sind.

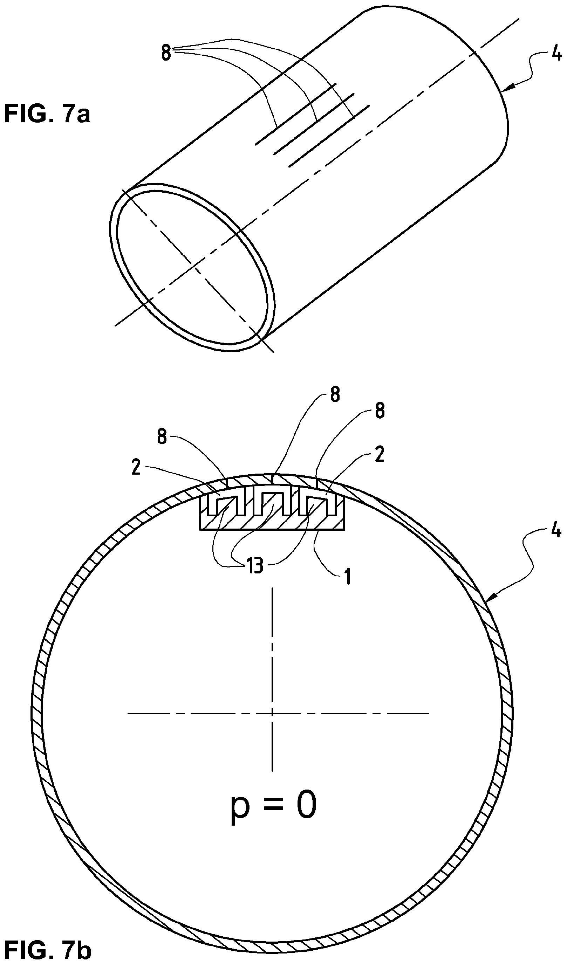

Wie aus den Fig. 7a und 7b ersichtlich ist, sind die Schlitze 8, wenn der Innendruck im Tropfbewässerungsrohr 4 gleich 0 ist, geschlossen. Es tritt dadurch kein Wasser aus, es wird auch vermieden, dass irgendwelche Verunreinigungen in die Eintrittsbereiche 2 eindringen können.

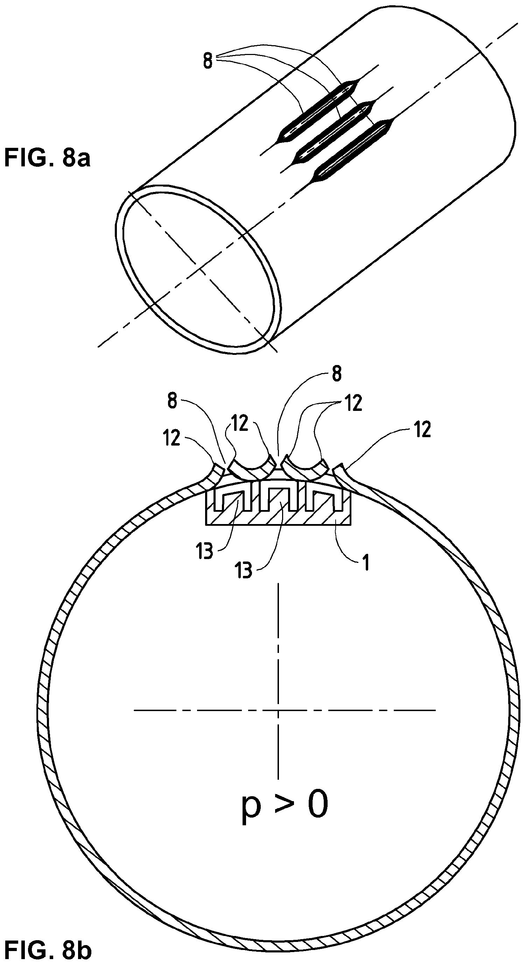

Wie aus den Fig. 8a und 8b ersichtlich ist, werden die Randbereiche 12 der Schlitze 8 beim Bewässerungsvorgang und wenn der Druck innerhalb des Tropfbewässerungsrohres 4 grösser als 0 ist, nach aussen aufgebogen, die Schlitze 8 werden geöffnet, das Wasser kann durch diese Schlitze 8 austreten.

Wenn der Bewässerungsvorgang abgeschlossen ist und innerhalb des Tropfbewässerungsrohres 4 wie vorgängig erläutert ein Unterdruck entsteht, werden die Randbereiche 12 der Schlitze 8 gegen das Dosierelement 1 hin eingebogen, diese Einbiegung erfolgt nur soweit, bis die Randbereiche 12 auf den Nocken 13 abgestützt werden, welche Nocken 13 die Abstützmittel 10 bilden. Die Schlitze 8 werden dadurch geschlossen, ein Eindringen von Verunreinigungen wird vermieden.

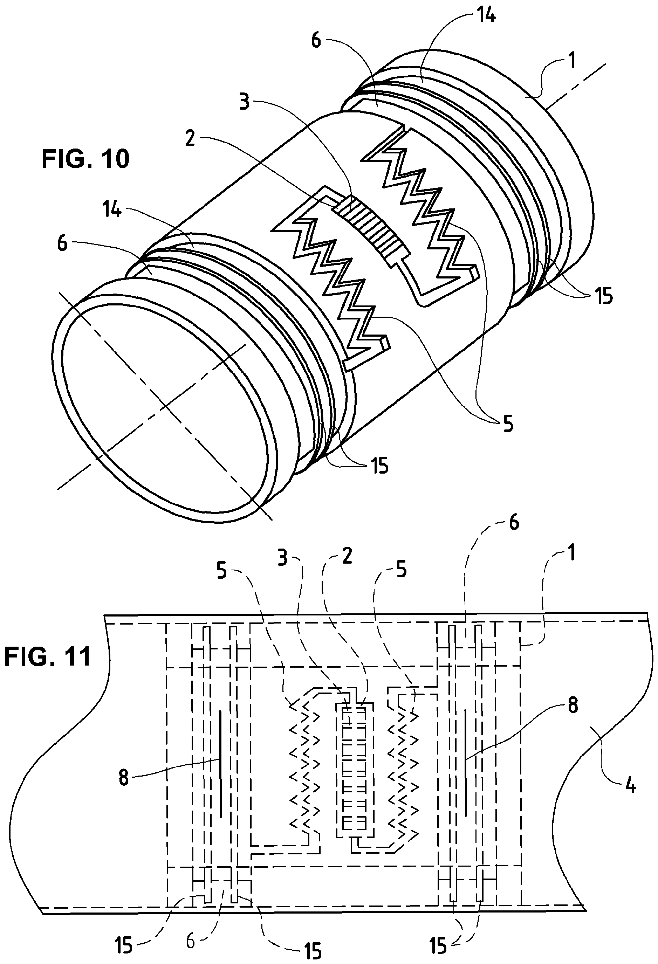

Aus den Fig. 10 und 11 ist eine Ausführungsform dargestellt, bei welcher das Dosierelement 1 aus einem Hohlzylinder gebildet ist, der, wie vorgängig beschrieben worden ist, ins Tropfbewässerungsrohr 4 eingesetzt und mit diesem verbunden ist. Dieses Dosierelement 1 weist einen Eintrittsbereich 2 auf, in welchem der Filter 3 angeordnet ist, durch welchen das Wasser aus dem Inneren des Tropfbewässerungsrohres über die Dosierbereiche 5 in die Austrittbereiche 6 geleitet wird. Diese Eintrittsbereiche 6 sind als Rillen 14 ausgebildet, welche sich über den gesamten Umfang des Dosierelementes 1 erstrecken. In diesen Rillen 14 sind zwei parallel verlaufende Rippen 15 angebracht, welche die Randbereiche der Schlitze 8, die die Austrittöffnungen 7 bilden, abstützen, wie später noch gesehen wird. Hierbei sind die Schlitze 8 quer zur Längsachse des Tropfbewässerungsrohres 4 angeordnet.

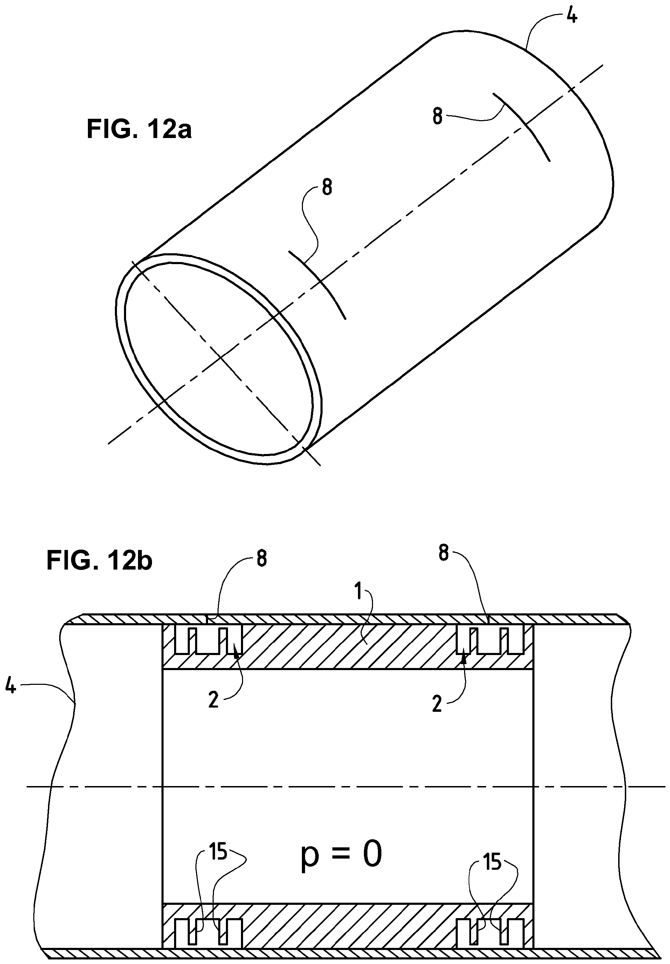

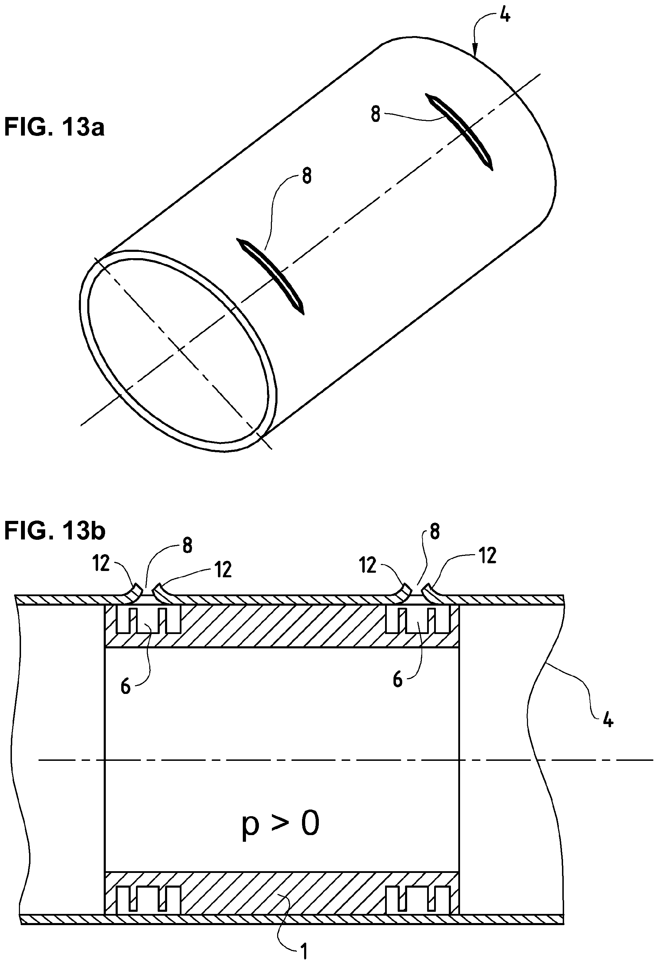

Wenn innerhalb des Tropfbewässerungsrohres 4 der Druck 0 ist, wie dies in den Fig. 12a und 12b dargestellt ist, sind die Schlitze 8, wie vorgängig beschrieben worden ist, geschlossen. Beim Bewässerungsvorgang, wenn der Druck innerhalb des Tropfbewässerungsrohres 4 ansteigt, wie dies in den Fig. 13a und 13b dargestellt ist, werden die Randbereiche 12 der Schlitze 8 nach aussen gebogen, dass Wasser kann aus den Schlitzen 8 zur Bewässerung austreten.

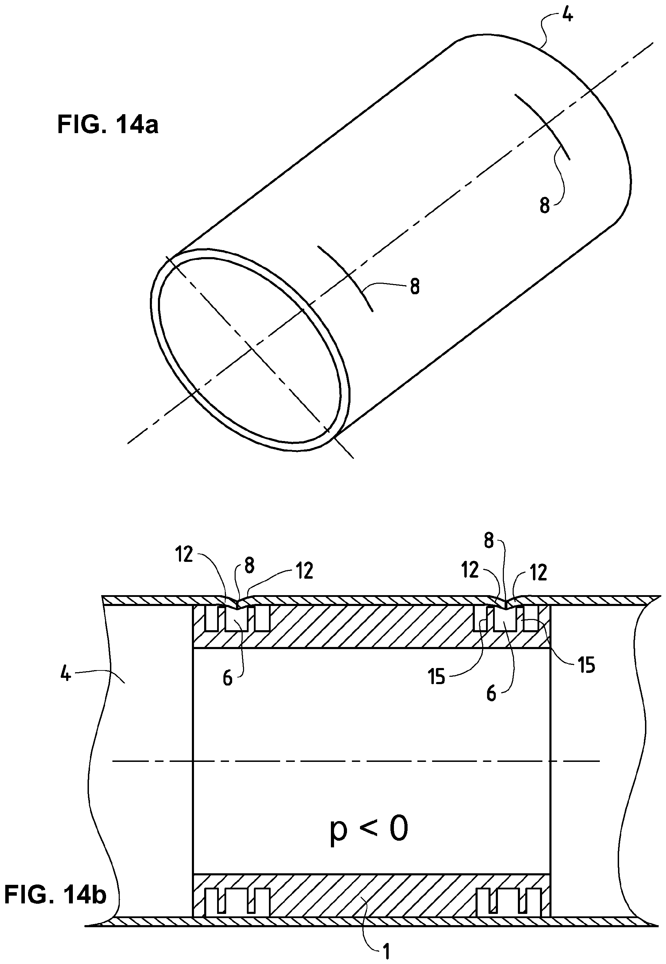

Wenn der Bewässerungsvorgang abgeschlossen ist und der Druck im Tropfbewässerungsrohr kleiner als 0 wird, wie dies in den Fig. 14a und 14b dargestellt ist, werden durch die Saugwirkung die Randbereiche 12 der Schlitze 8 gegen innen gebogen, dieses Einbiegen wird durch die Rippen 15 begrenzt, so dass die Schlitze 8 auch in dieser Situation geschlossen sind und ein Eindringen von Verunreinigungen vermieden wird.

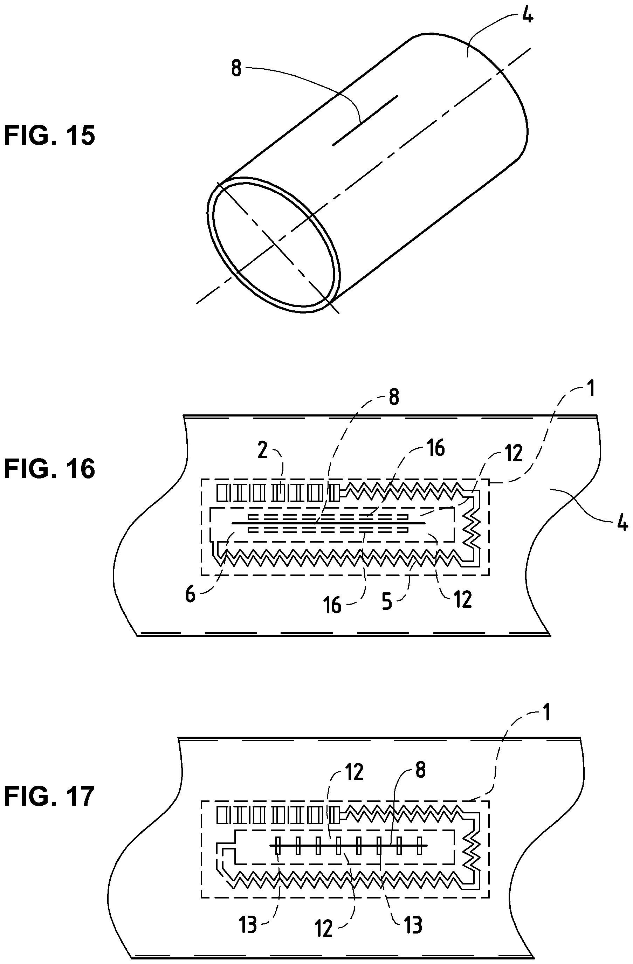

Fig. 15 zeigt ein Tropfbewässerungsrohr 4, bei welchem pro Dosierelement jeweils ein in Längsrichtung des Rohres ausgerichteter Schlitz 8 angeordnet ist.

Fig. 16 zeigt, dass zu dem in Fig. 15 dargestellten Schlitz 8 ein Dosierelement 1 in Form eines Plättchens angebracht ist, mit Eintrittsbereich 2, Dosierbereich 5 und Austrittbereich 6, wobei entlang des Schlitzes 8 jeweils zwei längs verlaufende Rippen 16 angeordnet sind, welche die Randbereiche 12 des Schlitzes 8 abstützen können.

Fig. 17 zeigt die gleiche Anordnung wie in Fig. 16, die Abstützmittel 10 im Dosierelement 1 sind hierbei als Nocken 13 ausgebildet, welche die Randbereiche 12 des Schlitzes 8 abstützen können.

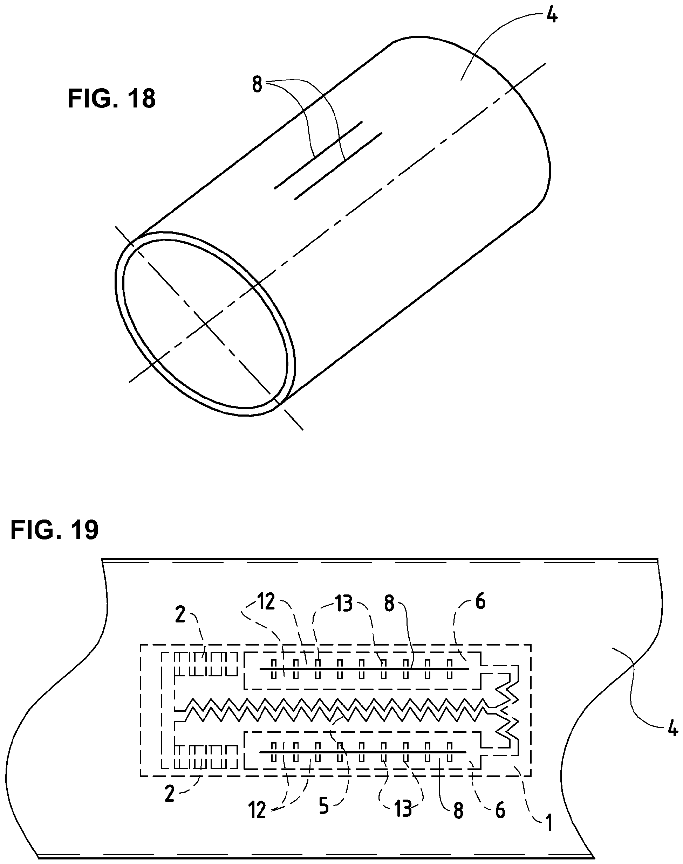

In den Fig. 18 und 19 ist eine Ausführungsform dargestellt, bei welchem das Dosierelement 1 zwei Eintrittsbereiche 2, einen Dosierbereich 5 und zwei Austrittbereiche 6 umfasst, wobei die Austrittbereiche 6 parallel zueinander und in Längsrichtung des Tropfbewässerungsrohres 4 ausgerichtet sind. Im Bereich der Austrittbereiche 6 sind die Schlitze 8 angeordnet, die Randbereiche 12 dieser Schlitze 8 werden durch Nocken 13 abgestützt, die längs der Schlitze 8 im Dosierelement 1 angebracht sind.

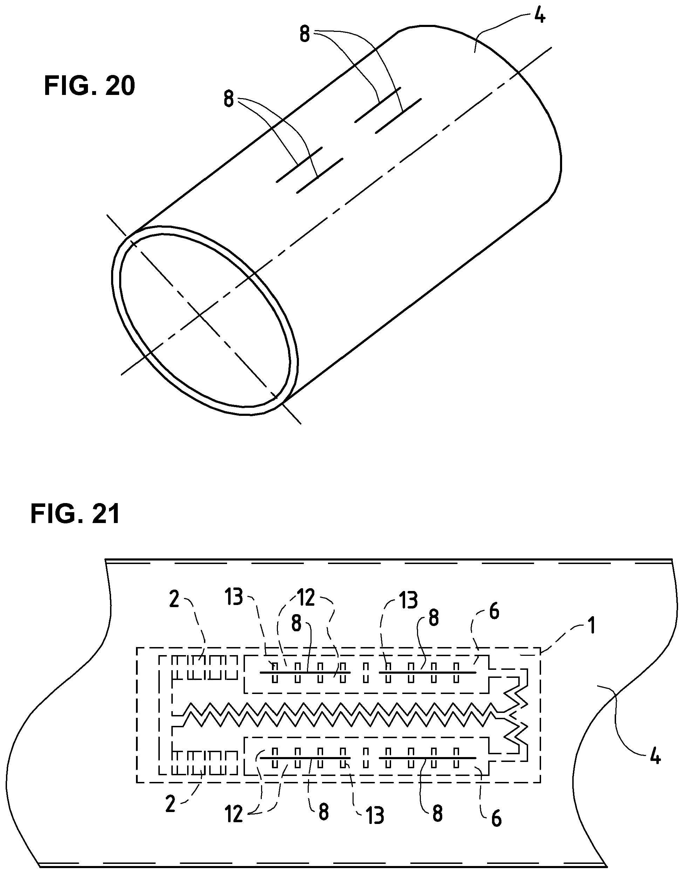

In den Fig. 20 und 21 ist eine Ausführungsform dargestellt, bei welcher pro Dosierelement 1 vier Schlitze 8 angeordnet sind. Das Dosierelement 1 weist zwei Eintrittsbereiche 2 auf, aus welchen das Wasser in einen zentral angeordneten Dosierbereich 5 gelangt, über eine Verzweigung gelangt das Wasser in die beiden Austrittbereiche 6, die parallel zueinander ausgerichtet sind. In jeden dieser Austrittbereiche 6 sind in der Wandung 9 des Tropfbewässerungsrohres 4 jeweils zwei Schlitze 8 angebracht, deren Randbereiche 12 durch Nocken 13 abgestützt sind.

Diese vorgängig beschriebenen Ausführungsformen zeigen, dass die die Austrittöffnung bildenden Schlitze durch Abstützmittel verschlossen bleiben, wenn innerhalb des Rohres ein Unterdruck auftritt, wodurch vermieden wird, dass Verunreinigungen in die Dosierelemente eindringen und diese verstopfen können. Ausserdem zeigen diese Ausführungsformen, dass unterschiedliche Dosierelemente eingesetzt werden können, so dass die Anzahl der Schlitze, durch welche das Wasser austreten kann, wie auch deren Ausrichtung praktisch beliebig gestaltet werden können, je nach den Anforderungen, die an das Bewässerungssystem gestellt werden.

## Patentansprüche

1. Tropfbewässerungsrohr (4) mit darin eingesetzten Dosierelementen (1), die mit der Wandung (9) des Tropfbewässerungsrohres (4) verbunden sind, welche Dosierelemente (1) jeweils Eintrittsbereiche (2), durch welche das Wasser vom Rohr (4) in die Dosierelemente (1) gelangt, Dosierbereiche (5), in welchen eine Druckreduzierung des durchfliessenden Wassers erfolgt, und Austrittbereiche (6), durch welche das Wasser über in der Rohrwandung (9) angebrachte Austrittöffnungen (7) aus dem Tropfbewässerungsrohr (4) austritt, umfassen, **dadurch gekennzeichnet, dass** die Austrittöffnungen (7) die Form eines geschlossenen Schlitzes (8) aufweisen, dessen Randbereiche (12) beim Bewässerungsvorgang nach aussen angehoben sind und eine Öffnung bilden, und die beim Beendigen oder Unterbrechen des Bewässerungsvorgangs durch Abstützmittel (10) derart abgestützt sind, dass ein Einbiegen der Randbereiche (12) des Schlitzes (8) gegen die Dosierelemente begrenzt ist und die schlitzförmigen Austrittsöffnungen verschlossen bleiben.

2. Tropfbewässerungsrohr (4) mit darin eingesetzten Dosierelementen (1) nach Anspruch 1, **dadurch gekennzeichnet, dass** die Abstützmittel (10) an den Dosierelementen (1) angeformt sind.

3. Tropfbewässerungsrohr (4) mit darin eingesetzten Dosierelementen (1) nach Anspruch 1 oder 2, **dadurch gekennzeichnet, dass** die Abstützmittel (10) aus Nocken (13) gebildet sind, die entlang des Schlitzes (8) an den Dosierelementen (1) angeordnet sind.

4. Tropfbewässerungsrohr (4) mit darin eingesetzten Dosierelementen (1) nach Anspruch 1 oder 2, **dadurch gekennzeichnet, dass** die Abstützmittel (10) als Rippen (15; 16) ausgebildet sind, die längs zum jeweiligen Schlitz (8) an den Dosierelementen (1) angeordnet sind.

5. Tropfbewässerungsrohr (4) mit darin eingesetzten Dosierelementen (1) nach einem der Ansprüche 1 bis 4, **dadurch gekennzeichnet, dass** jedes Dosierelement (1) mindestens einen Austrittbereich (6) umfasst.

6. Tropfbewässerungsrohr (4) mit darin eingesetzten Dosierelementen (1) nach einem der Ansprüche 1 bis 5, **dadurch gekennzeichnet, dass** für jeden Austrittbereich (6) in der Rohrwandung (9) mindestens eine Austrittöffnung (7) in Form eines Schlitzes (8) vorgesehen ist.

7. Tropfbewässerungsrohr (4) mit darin eingesetzten Dosierelementen (1) nach einem der Ansprüche 1 bis 6, **dadurch gekennzeichnet, dass** die Dosierelemente (1) die Form eines Hohlzylinders aufweisen.

8. Tropfbewässerungsrohr (4) mit darin eingesetzten Dosierelementen (1) nach einem der Ansprüche 1 bis 6, **dadurch gekennzeichnet, dass** die Dosierelemente (1) die Form eines Plättchens oder Bandes aufweisen.

9. Tropfbewässerungsrohr (4) mit darin eingesetzten Dosierelementen (1) nach einem der Ansprüche 1 bis 8, **dadurch gekennzeichnet, dass** die Schlitze (8) parallel zur Längsachse des Tropfbewässerungsrohres (4) ausgerichtet sind.

10. Tropfbewässerungsrohr (4) mit darin eingesetzten Dosierelementen (1) nach einem der Ansprüche 1 bis 7, **dadurch gekennzeichnet, dass** die Schlitze (8) quer zur Längsachse des Tropfbewässerungsrohres (4) ausgerichtet sind.

## Claims

1. Drip irrigation tube (4) with dosing elements (1) inserted therein, which dosing elements are connected to the walling (9) of the drip irrigation tube (4), which dosing elements (1) each comprise inlet regions (2), through which the water passes from the tube (4) into the dosing elements (1), dosing regions (5), in which a pressure reduction of the through-flowing water takes place, and outlet regions (6), through which the water issues out of the drip irrigation tube (4) via outlet openings (7) made in the tube walling (9), **characterized in that** the outlet openings (7) are in the form of a slit (8), the edge regions (12) of which, during the irrigation procedure, are outwardly raised and form an opening, and, when the irrigation procedure is ended or interrupted, are supported by supporting means (10) in such a manner as to limit bending of the edge regions (12) of the slit (8) towards the dosing elements and the slit-shaped outlet openings remain closed.

2. Drip irrigation tube (4) with dosing elements (1) inserted therein, according to claim 1, **characterized in that** the supporting means (10) are integrally formed on the dosing elements (1).

3. Drip irrigation tube (4) with dosing elements (1) inserted therein, according to claim 1 or 2, **characterized in that** the supporting means (10) are formed from protrusions (13) which are arranged along the slit (8) on the dosing elements (1).

4. Drip irrigation tube (4) with dosing elements (1) inserted therein, according to claim 1 or 2, **characterized in that** the supporting means (10) are designed as ribs (15; 16), which are arranged longitudinally with respect to the respective slit (8) on the dosing elements (1).

5. Drip irrigation tube (4) with dosing elements (1) inserted therein, according to one of claims 1 to 4, **characterized in that** each dosing element (1) comprises at least one outlet region (6).

6. Drip irrigation tube (4) with dosing elements (1) inserted therein, according to one of claims 1 to 5, **characterized in that** at least one outlet opening (7) in the form of a slit (8) is provided for each outlet region (6) in the tube walling (9).

7. Drip irrigation tube (4) with dosing elements (1) inserted therein, according to one of claims 1 to 6, **characterized in that** the dosing elements (1) are in the form of a hollow cylinder.

8. Drip irrigation tube (4) with dosing elements (1) inserted therein, according to one of claims 1 to 6, **characterized in that** the dosing elements (1) are in the form of a disk or band.

9. Drip irrigation tube (4) with dosing elements (1) inserted therein, according to one of claims 1 to 8, **characterized in that** the slits (8) are oriented parallel to the longitudinal axis of the drip irrigation tube (4).

10. Drip irrigation tube (4) with dosing elements (1) inserted therein, according to one of claims 1 to 7, **characterized in that** the slits (8) are oriented transversely to the longitudinal axis of the drip irrigation tube (4).

## Revendications

1. Tuyau d'irrigation de type goutte à goutte (4) doté d'éléments de dosage (1) intégrés, qui sont reliés à la paroi (9) du tuyau d'irrigation de type goutte à goutte (4), lesquels éléments de dosage (1) comprennent chacun des zones d'entrée (2) à travers lesquelles l'eau passe du tuyau (4) dans les éléments de dosage (1), les zones de dosage (5), dans lesquelles une réduction de la pression de l'eau courante a lieu, et des zones de sortie (6), à travers lesquelles l'eau sort du tuyau d'irrigation de type goutte à goutte (4) via des ouvertures de sortie (7) réalisées dans la paroi du tuyau (9), **caractérisé en ce que** les ouvertures de sortie (7) sont en forme de fente (8), dont les bords (12), sont élevées vers l'extérieur et forment une ouverture durant le processus d'irrigation, et, lorsque le processus d'irrigation est terminé ou interrompu, sont maintenus par des moyens de support (10) de manière à limiter la courbure des bords (12) de la fente (8) vers les éléments de dosage, et les ouvertures de sortie en forme de fente restent fermées.

2. Tuyau d'irrigation de type goutte à goutte (4) doté d'éléments de dosage (1) intégrés selon la revendication 1, **caractérisé en ce que** les moyens de support (10) sont formés directement sur les éléments de dosage (1).

3. Tuyau d'irrigation de type goutte à goutte (4) doté d'éléments de dosage (1) intégrés selon la revendication 1 ou 2, **caractérisé en ce que** les moyens de support (10) sont formés de protrusions (13) qui sont agencées le long de la fente (8) sur les éléments de dosage (1).

4. Tuyau d'irrigation de type goutte à goutte (4) doté d'éléments de dosage (1) intégrés selon la revendication 1 ou 2, **caractérisé en ce que** les moyens de support (10) sont conçus comme des nervures (15 ; 16), qui sont agencées longitudinalement par rapport à leur fente respective (8) sur les éléments de dosage (1).

5. Tuyau d'irrigation de type goutte à goutte (4) doté d'éléments de dosage (1) intégrés selon l'une des revendications 1 à 4, **caractérisé en ce que** chaque élément de dosage (1) comprend au moins une zone de sortie (6).

6. Tuyau d'irrigation de type goutte à goutte (4) doté d'éléments de dosage (1) intégrés selon l'une des revendications 1 à 5, **caractérisé en ce qu'**au moins une ouverture de sortie (7) en forme de fente (8) est prévue pour chaque zone de sortie (6) dans la paroi du tuyau (9).

7. Tuyau d'irrigation de type goutte à goutte (4) doté d'éléments de dosage (1) intégrés selon l'une des revendications 1 à 6, **caractérisé en ce que** les éléments de dosage (1) présentent une forme de cylindre creux.

8. Tuyau d'irrigation de type goutte à goutte (4) doté d'éléments de dosage (1) intégrés selon l'une des revendications 1 à 6, **caractérisé en ce que** les éléments de dosage (1) sont en forme de plaquette ou de bande.

9. Tuyau d'irrigation de type goutte à goutte (4) doté d'éléments de dosage (1) intégrés selon l'une des revendications 1 à 8, **caractérisé en ce que** les fentes (8) sont orientées parallèlement à l'axe longitudinal du tube d'irrigation de type goutte à goutte (4).

10. Tuyau d'irrigation de type goutte à goutte (4) doté d'éléments de dosage (1) intégrés selon l'une des revendications 1 à 7, **caractérisé en ce que** les fentes (8) sont orientées transversalement par rapport à l'axe longitudinal du tuyau d'irrigation de type goutte à goutte (4).
